# EUROPÄISCHE PATENTSCHRIFT

(11) **EP 3 408 031 B1**
(45) Veröffentlichungstag und Bekanntmachung des Hinweises auf die Patenterteilung: **19.05.2021**
(21) Anmeldenummer: 17704657.0
(22) Anmeldetag: 18.01.2017
(51) Int. Cl.: B04B 9/12, B04B 3/04, B04B 1/20

(54) **LAGERANORDNUNG EINER SCHNECKE EINER VOLLMANTELSCHNECKENZENTRIFUGE**
BEARING ARRANGEMENT OF A SCREW OF A SOLID BOWL SCREW CENTRIFUGE
ENSEMBLE BUTÉE POUR UNE VIS SANS FIN D'UNE CENTRIFUGEUSE À VIS À BOL PLEIN

(30) Priorität: 29.01.2016 DE 102016101574
(43) Veröffentlichungstag der Anmeldung: 05.12.2018
(73) Patentinhaber: Flottweg SE, 84137 Vilsbiburg (DE)
(72) Erfinder: VIELHUBER, Benno, 84137 Vilsbiburg (DE)
(74) Vertreter: Meissner Bolte Partnerschaft mbB
(86) Internationale Anmeldenummer: PCT/DE2017/100023
(87) Internationale Veröffentlichungsnummer: WO 2017/129166

(56) Entgegenhaltungen:
- DE-A1- 3 414 774
- DE-A1-102013 224 480
- DE-B3-102013 215 554
- KR-A- 20120 046 900
- US-A- 2 827 229

## Beschreibung

### Hintergrund der Erfindung

Die Erfindung betrifft eine Vollmantelschneckenzentrifuge umfassend eine Lageranordnung einer Schnecke mit einer Zentrifugenachse, einem ersten Axiallager und einem zweiten Axiallager, insbesondere einer Lagerstelle, die zum Aufnehmen einer Axialkraft der Schnecke vorgesehen sind.

Vollmantelschneckenzentrifugen, auch als Decanter bekannt, separieren mit einer Trommel, die mit einer Trommeldrehzahl um eine Zentrifugenachse rotiert, kontinuierlich fließfähige Stoffgemische in meist eine leichte und eine schwere Phase. Die schwere Phase wird innerhalb der Trommel von einer Schnecke in eine Förderrichtung zu einem Endbereich der Trommel geschoben. Die Schnecke befindet sich dazu in der Trommel und rotiert ebenfalls um die Zentrifugenachse. Sie dreht sich relativ zu der Trommeldrehzahl mit einer Differenzdrehzahl. Bei dem Verschieben der schweren Phase in die Förderrichtung, wirkt entgegen der Förderrichtung eine Axialkraft. Die Axialkraft wird von einer Lageranordnung der Schnecke aufgenommen. Die Lageranordnung umfasst dazu mindestens ein Axiallager. Es sind auch Vollmantelschneckenzentrifugen bekannt, die ein erstes und ein zweites Axiallager aufweisen, die beide in Axialrichtung die Axialkraft der Schnecke aufnehmen. Eine derartige Vorrichtung ist aus der KR20120046900 bekannt.

Solche Lageranordnungen mit mehreren Axiallagern können zwar insgesamt höhere Axialkräfte als einzelne Axiallager aufnehmen, es kann aber dennoch gegebenenfalls passieren, dass einzelne Axiallager dieser Lageranordnungen defekt werden.

### Zugrundeliegende Aufgabe

Der Erfindung liegt die Aufgabe zugrunde, eine Lageranordnung zu schaffen, bei der mehrere Axiallager vorhanden sind, diese aber im Vergleich zu bekannten Gestaltungen eine höhere Lebensdauer aufweisen.

### Erfindungsgemäße Lösung

Diese Aufgabe ist erfindungsgemäß mit einer Vollmantelschneckenzentrifuge umfassend eine Lageranordnung einer Schnecke gelöst, mit einer Zentrifugenachse, einem ersten Axiallager und einem zweiten Axiallager, die zum Aufnehmen einer Axialkraft der Schnecke vorgesehen sind, wobei ein elastisches Mittel vorgesehen ist, an dem das zweite Axiallager zur Abstützung der Axialkraft der Schnecke in Axialrichtung abgestützt ist.

Bei herkömmlichen Lageranordnungen für die Schnecke einer Vollmantelschneckenzentrifuge mit zwei Axiallagern ist es schwer zu kalkulieren, wie das jeweilige Axiallager mit der Axialkraft der Schnecke belastet ist. Erfindungsgemäß wurde festgestellt, dass es bei solchen Lageranordnungen immer wieder vorkommt, dass einzelne Axiallager über ihre Belastungsgrenze hinaus belastet werden.

Bei der erfindungsgemäßen Lageranordnung hingegen ist ein elastisches Mittel vorgesehen, an dem das zweite Axiallager zur Abstützung der Axialkraft der Schnecke in Axialrichtung abgestützt ist. Ein elastisches Mittel hat die Eigenschaft, dass es unter einer Krafteinwirkung seine Form verändert und bei einem Rückgang dieser Krafteinwirkung sich in Richtung seiner Ursprungsform zurückverformt. Ein elastisches Mittel hat gegenüber der Krafteinwirkung eine Elastizität die mit einer Federkonstante anzugeben ist. An einem solchen elastischen Mittel ist erfindungsgemäß das zweite Axiallager derart abgestützt, wobei dann entsprechend mit zunehmender Axialkraft der Schnecke das elastische Mittel komprimiert wird. Das elastische Mittel verkleinert sich mit der Kompression und die Schnecke bewegt sich in Axialrichtung. Mit der Bewegung der Schnecke in Axialrichtung wird dann auf das erste Axiallager eine sich verstärkende Axialkraft ausgeübt. Zugleich wird mit dem erfindungsgemäßen elastischen Mittel sichergestellt, dass das zweite Axiallager nicht überbelastet werden kann.

Um insbesondere beide Axiallager gleich mit der Axialkraft zu belasten, ist erfindungsgemäß vorteilhaft die Federkonstante des elastischen Mittels so zu wählen, dass die maximal entstehende Axialkraft auf beide Axiallager gleich stark verteilt ist. So ist auch eine Überlastung des ersten Axiallagers zu vermeiden. Zusätzlich zu diesem Vorteil kann das elastische Mittel in bestimmten Bausituationen auch Stöße und Schwingungen der Schnecke abfedern und es kann Formänderungen von Bauteilen, wie beispielhaft eine thermische Längenänderung oder einen Abrieb durch Verschleiß, ausgleichen.

Die erfindungsgemäße Kraftaufteilung bewirkt, dass sich die Axialkraft auf jedes Axiallager genau vorbestimmt verteilt und begrenzt ist. Die einzelne Belastung des jeweiligen Axiallagers beträgt so maximal nur die Hälfte der maximalen Axialkraft. Das jeweilige Axiallager kann so besonders klein dimensioniert sein. Mit derart kleinen Axiallagern ist auch die radiale Bauhöhe der Lageranordnung besonders gering. Diese geringe radiale Bauhöhe der Lageranordnung ist insbesondere dann von Vorteil, wenn in der Vollmantelschneckenzentrifuge mit einer großen Teichtiefe gearbeitet werden soll. Dies bedeutet, dass das sich in der Vollmantelschneckenzentrifuge befindende Material weit nach radial innen ragt und entsprechend für die dortige Nabe der Schnecke und deren Lageranordnung in radialer Richtung nur wenig Bauraum verbleibt.

Vorteilhaft ist das elastische Mittel zwischen dem ersten und dem zweiten Axiallager angeordnet. Bei dieser Anordnung des elastischen Mittels befindet dieses also unmittelbar zwischen den beiden Axiallagern und nutzt einen dort vorhandenen Bauraum. Zugleich wird mit einer Belastung und Verschiebung des zweiten Axiallagers das elastische Mittel unmittelbar komprimiert. Diese Anordnung weist also ansonsten nur eine geringe Restelastizität auf. Eine zunehmende Axialkraft der Schnecke führt damit unmittelbar zu einer Kompression des elastischen Mittels und einer damit verbundenen, entsprechend unmittelbaren Weitergabe der Axialkraft auf das erste Axiallager.

Ferner vorteilhaft sind das erste und das zweite Axiallager je mit einem Lagerinnenring und einem Lageraußenring gestaltet. Das elastische Mittel ist dabei zwischen den beiden Lagerinnenringen angeordnet und zwischen den beiden Lageraußenringen ist ein weniger-elastisches, insbesondere ein nicht-elastisches Mittel angeordnet. Der Lagerinnenring ist in Bezug auf dessen Drehachse, welche vorliegend die Zentrifugenachse ist, der radial innen liegende Ring. Der Lageraußenring ist entsprechend der radial außen liegende Ring. Zwischen den beiden einander in Axialrichtung zugewandten Stirnseiten der Lagerinnenringe ist dann das elastische Mittel angeordnet. Zwischen den beiden einander in Axialrichtung zugewandten Stirnseiten der Lageraußenringe ist das weniger-elastische bzw. nicht-elastische Mittel angeordnet. Das elastische Mittel wird bei ein und derselben Krafteinwirkung stärker komprimiert als das weniger-elastische bzw. das nicht-elastische Mittel. Dadurch werden bei Einwirken der Axialkraft der Schnecke auf die derartige Lageranordnung die Lageraußenringe beider Axiallager verschoben. Zugleich wird der Lagerinnenring des einen Axiallagers relativ zum Lagerinnenring des anderen Axiallagers verschoben. Dadurch verändern sich zwischen den Lageraußenringen und den zugehörigen Lagerinnenringen die räumlichen Situationen und damit die Belastungssituationen der Axiallager.

Alternativ sind vorteilhaft das erste und das zweite Axiallager je mit einem Lagerinnenring und einem Lageraußenring gestaltet, und zugleich ist das elastische Mittel zwischen den beiden Lageraußenringen angeordnet und zwischen den beiden Lagerinnenringen ist ein weniger-elastisches, insbesondere ein nicht-elastisches Mittel angeordnet. Diese Ausführungsform ist funktional umgekehrt zur oben zuletzt erläuterten Ausführungsform aufgebaut. Entsprechend kann bei dieser Ausführungsform mit etwas anders gestalteten Axiallagern gearbeitet werden, die bei bestimmten Bauraumsituationen besonders vorteilhaft sein können.

Ferner ist bevorzugt das zweite Axiallager als ein Spindellager und das erste Axiallager als ein Rillenkugellager gestaltet. Ein Spindellager und ein Rillenkugellager sind Axiallager in unterschiedlicher Bauform. Beide Bauformen haben insbesondere kugelförmige Wälzkörper, die zwischen einem Lagerinnenring und einem Lageraußenring jeweils an einer Laufbahn laufen. Die Laufbahn weist relativ zur Radialrichtung des Axiallagers einen Druckwinkel bzw. Berührwinkel auf. Der Druckwinkel der Laufbahnen von Rillenkugellagern ist in der Regel 0° (in Worten: null Grad). Bei Spindellagern beträgt der Druckwinkel in der Regel zwischen 10 und 30° (in Worten: zehn und dreißig Grad), besonders vorteilhaft zwischen 20 und 30° (in Worten: zwanzig und dreißig Grad). Je größer der Druckwinkel ist, umso mehr Axialkraft kann das Spindellager aufnehmen. Indem der Druckwinkel des Spindellagers an die anfallende Axialkraft angepasst ist, ist so die erfindungsgemäße Lageranordnung besonders einfach zu dimensionieren. Das Rillenkugellager nimmt besonders Kräfte in Radialrichtung auf. In Axialrichtung nimmt ein solches Radialkugellager eigentlich nur geringe Kräfte auf. Es kann erfindungsgemäß aber dennoch besonders vorteilhaft eingesetzt werden, weil sichergestellt ist, dass es in Axialrichtung nicht überbelastet wird. Dadurch kann auch der Vorteil genutzt werden, dass Radialkugellager preisgünstig, wartungsarm und leicht verfügbar sind.

Alternativ ist ferner das zweite Axiallager als ein Schrägkugellager und das erste Axiallager als ein Rillenkugellager gestaltet. Ein Schrägkugellager hat in der Regel einen Druckwinkel zwischen 15 und 60° (in Worten: fünfzehn und sechzig Grad), besonders bevorzugt zwischen 40 und 50° (in Worten: vierzig und fünfzig Grad). Der Druckwinkel beeinflusst auch bei dieser Lagerform die Aufnahmefähigkeit an Axialkraft. Ein Schrägkugellager kann aufgrund des größeren Druckwinkels mehr Axialkraft als ein Spindelkugellager aufnehmen. Ein Schrägkugellager ist entsprechend bei einer größeren Axialkraft von Vorteil.

In bevorzugter Weise ist das zweite Axiallager als ein Schrägkugellager und das erste Axiallager als ein Vierpunktlager gestaltet. Ein Vierpunktlager hat insbesondere einen Druckwinkel um die 35° (in Worten: fünfunddreißig Grad). Bei einem Vierpunktlager weisen die dortigen Wälzkörper vier Berührpunkte an den jeweiligen Laufbahnen auf. Vierpunktlager haben ferner vorteilhaft einen geteilten Lagerinnenring oder einen geteilten Lageraußenring. Aufgrund derart geteilter Lagerringe können bei einem Vierpunktlager mehr Wälzkörper als bei einem gleichgroßen Schrägkugellager verbaut werden. Vierpunktlager können aufgrund der größeren Anzahl an Wälzkörpern und den vier Berührpunkten sowohl eine vergleichsweise große Axialkraft als auch eine große Radialkraft aufnehmen. Zusätzlich dazu sind Vierpunktlager aufgrund der geteilten Lagerringe montagefreundlich.

Ferner ist vorteilhaft das zweite Axiallager als ein Kegelrollenlager und das erste Axiallager als ein Rillenkugellager gestaltet. Bei Kegelrollenlagern sind im Unterschied zu den vorher genannten Lagern die Wälzkörper nicht kugelförmig, sondern kegelförmig. Der Wälzkörper des Kegelrollenlagers läuft nicht an einer Laufbahn, sondern an einer vergleichsweise breiten Lauffläche. Kegelrollenlager können eine sehr hohe Axialkraft und eine sehr hohe Radialkraft aufnehmen. Darüber hinaus sind Kegelrollenlager besonders einfach zu montieren, da ihr Lageraußenring zunächst lose ist und separat montiert werden kann.

Besonders bevorzugt ist ferner ein drittes Axiallager zum Aufnehmen einer Axialkraft der Schnecke vorgesehen und ein weiteres elastisches Mittel vorgesehen, an dem das dritte Axiallager in Axialrichtung abgestützt ist. Das dritte Axiallager ist bei dieser Anordnung zusätzlich zu den beiden anderen Axiallagern in Reihe geschaltet. Das dritte Axiallager bewirkt, dass sich die Axialkraft auf diese drei Axiallager aufteilt. Die einzelne Belastung des jeweiligen Axiallagers beträgt so vorzugsweise nur ein Drittel der maximalen Axialkraft. Das jeweilige Axiallager kann so besonders klein ausgeführt sein.

Erfindungsgemäß besonders bevorzugt weist das elastische Mittel, insbesondere das weitere elastische Mittel, eine Vorspannung auf. Die Vorspannung ergibt sich insbesondere dadurch, dass das elastische Mittel im eingebauten Ruhezustand bereits vorkomprimiert ist. Die derartige Vorkompression des elastischen Mittels mit einer Vorspannkraft bewirkt, dass von diesem an die angrenzenden Bauteile bereits im Ruhezustand eine Kraft ausgeübt wird. Die Vorspannkraft des elastischen Mittels liegt vorzugsweise im Bereich von 2.500 bis 300.000 Newton (in Worten zweitausendfünfhundert bis dreihunderttausend Newton). Insbesondere bei kleinen Vollmantelschneckenzentrifugen im Bereich von 2.500 bis 10.000 Newton (in Worten: zweitausendfünfhundert bis zehntausend Newton). Bei mittelgroßen Vollmantelschneckenzentrifugen im Bereich von 10.000 bis 100.000 (in Worten: zehntausend bis hunderttausend Newton), insbesondere 30.000 Newton (in Worten: dreißigtausend Newton) und bei großen Vollmantelschneckenzentrifugen im Bereich von 100.000 bis 300.000 Newton (in Worten: einhunderttausend bis dreihunderttausend Newton). Die Vorspannkraft entspricht bei zwei Axiallagern vorzugsweise der Hälfte der maximalen Axialkraft im Betriebszustand. Die Vorspannkraft bewirkt insbesondere, dass im Ruhezustand beide Lager mit einander entgegengesetzten Axialkräften belastet sind. Bei einer Axialkraft der Schnecke im Betriebszustand kleiner der Vorspannkraft, wird das zweite Axiallager zusätzlich mit Axialkraft belastet und das ersten Axiallager entlastet. Ist die auftretende Axialkraft gleich der Vorspannkraft, wirkt an dem ersten Axiallager keine Axialkraft mehr. Bei einer Axialkraft größer der Vorspannkraft wirkt auf beide Axiallager eine Axialkraft in nur einer Richtung. Überraschenderweise hat sich ergeben, dass mit einer derartigen Vorspannung die zugehörigen Axiallager besonders gleichmäßig belastet und die Wartungsintervalle und Austauschintervalle der Axiallager besonders leicht zu bestimmen sind.

### Kurzbeschreibung der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen Längsschnitt einer Vollmantelschneckenzentrifuge gemäß dem Stand der Technik entlang deren Zentrifugenachse,
- Fig. 2: das Detail II gemäß Fig. 1 ,
- Fig. 3: einen Längsschnitt einer Vollmantelschneckenzentrifuge gemäß eines ersten Ausführungsbeispiels der Erfindung,
- Fig. 4: das Detail IV gemäß Fig. 3,
- Fig. 5: das Detail V gemäß Fig. 4 einer ersten Variante,
- Fig. 6: das Detail VI gemäß Fig. 4 einer zweiten Variante,
- Fig. 7: das Detail VII gemäß Fig. 4 einer dritten Variante,
- Fig. 8: das Detail VIII gemäß Fig. 4 einer vierten Variante,
- Fig. 9: das Detail IX gemäß Fig. 4 einer fünften Variante,
- Fig. 10: das Detail X gemäß Fig. 4 einer sechsten Variante und
- Fig. 11: das Detail XI gemäß Fig. 4 einer siebten Variante.

### Detaillierte Beschreibung des Ausführungsbeispiels

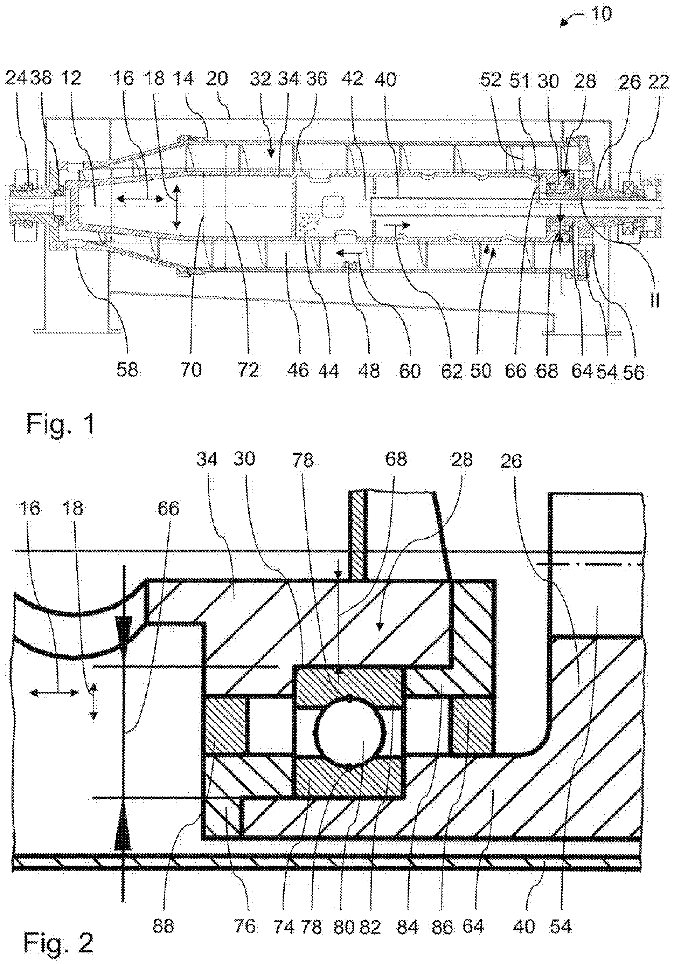

Fig. 1 zeigt eine Vollmantelschneckenzentrifuge 10 mit ihrer um eine Zentrifugenachse 12 drehbaren, hohlzylinderförmigen Zentrifugentrommel 14. Die Zentrifugenachse 12 definiert eine Axialrichtung 16 und eine Radialrichtung 18. Die Zentrifugentrommel 14 ist von einem Gehäuse 20 umgeben und an ihren beiden axialen Endbereichen mittels eines ersten Trommellagers 22 und eines zweiten Trommellagers 24 gelagert. Das erste Trommellager 22 stützt die Zentrifugentrommel 14 an einem Trommeldeckel 26 ab. Der Trommeldeckel 26 seinerseits stützt in der Zentrifugentrommel 14 mittels einer Lageranordnung 28 eine Schnecke 32 ab. Die Lageranordnung 28 ist mit einem Axiallager 30 gestaltet.

Die Schnecke 32 umfasst eine im Wesentlichen hohlzylinderförmige Schneckennabe 34 und eine diese radial außen umgebende Schneckenwendel 36. Die Schneckennabe 34 ist an ihrem einen axialen Endbereich mittels der Lageranordnung 28 und an ihrem anderen axialen Endbereich mittels eines Schneckenlagers 38 innerhalb der Zentrifugentrommel 14 drehbar abgestützt.

In die Zentrifugentrommel 14 hinein führt durch das Trommellager 22 und den ersten Trommeldeckel 26 hindurch ein Einlassrohr 40. Das Einlassrohr 40 erstreckt sich längs der Zentrifugenachse 12 bis zu einem Einlassraum 42 innerhalb der Schneckennabe 34. Das Einlassrohr 40 dient zum Zuführen von gemischtem Material 44, vorliegend Klärschlamm. Das gemischte Material 44 fliest von dem Einlassraum 42 nach radial außen in einen Separierraum 46. In dem Separierraum 46 wird das gemischte Material 44 in eine schwere Phase 48, vorliegend entwässerter Klärschlamm, und in eine leichte Phase 50, vorliegend geklärte Flüssigkeit, getrennt bzw. geklärt. Die schwere Phase 48 strömt aufgrund der entstehenden Zentrifugalkraft in Radialrichtung 18 nach außen und legt sich an der Innenseite der Zentrifugentrommel 14 an. Die leichte Phase 50 schwimmt radial innen auf der schweren Phase 48 auf.

Beide Phasen 48 und 50 ergeben in dem Separierraum 46 zusammen einen Flüssigkeitsstand 51. Der Abstand des Flüssigkeitsstands 51 zur Innenseite der Zentrifugentrommel 14 hin wird üblicherweise als Teichtiefe 52 bezeichnet. Die Teichtiefe 52 wird von Auslassöffnungen 54 bestimmt, an denen dazu je eine Wehrplatte 56 zum definierten Zurückhalten der leichten Phase 50 vorgesehen ist. Die Auslassöffnungen 54 sind im Trommeldeckel 26 um die Zentrifugenachse 12 herum ausgebildet. Die Wehrplatten 56 werden von austretender leichter Phase 50 überströmt. Ihre radiale Lage definiert also die Teichtiefe 52.

An dem dem ersten Trommeldeckel 26 gegenüberliegenden Endbereich der Zentrifugentrommel 14 befinden sich in Radialrichtung außen Auswurföffnungen 58 für die schwere Phase 48. Die schwere Phase 48 wird dazu mittels der Schneckenwendel 36 in einer Förderrichtung 60 nach radial innen zu den Auswurföffnungen 58 hin bewegt. Durch die Auswurföffnungen 58 hindurch wird die schwere Phase 48 dann aufgrund der Zentrifugalkraft der drehenden Zentrifugentrommel 14 aus der Zentrifugentrommel 14 herausgeschleudert. Entgegen der Förderrichtung 60 tritt dabei an der Schneckenwendel 36 eine Axialkraft 62 auf, welche zugleich die gesamte Schnecke 32 in die Richtung des Trommeldeckels 26 schiebt.

Am Trommeldeckel 26 befindet sich in dessen Zentrum um das Einlassrohr 40 herum ein rohrförmiger, nach innen abstehender Abstützbereich 64, der mit dem Trommeldeckel 26 einstückig verbunden ist. Der Abstützbereich 64 trägt bzw. stützt an seinem in das Innere der Zentrifugentrommel 14 gerichteten Endbereich die Lageranordnung 28 ab.

Die radiale Höhe des Abstützbereichs 64, eine Lagerhöhe 66 der Lageranordnung 28 und eine Wandstärke 68 der Schneckennabe 34 an der Lageranordnung 28 definieren zusammen einen Außendurchmesser 70 der Schneckennabe 34. Der Außendurchmesser 70 der Schneckennabe 34 und ein Innendurchmesser 72 der Zentrifugentrommel 14 bestimmen zugleich die maximale Teichtiefe 52 der Vollmantelschneckenzentrifuge 10.

Fig. 2 veranschaulicht eine Lageranordnung 28 gemäß dem Stand der Technik mit nur einem einzigen Axiallager 30. Das Axiallager 30 umfasst in Radialrichtung 18 innen einen Lagerinnenring 74, der auf dem Abstützbereich 64 des Trommeldeckels 26 aufgepresst ist. Am axial inneren Ende des Abstützbereichs 64 befindet sich ein im Querschnitt L-förmiger Fixierring 76, der den Lagerinnenring 74 am Abstützbereich 64 axial fixiert. Der Lagerinnenring 74 weist in Radialrichtung 18 außen eine Lagerbahn 78 auf, an der entlang in Umfangsrichtung um den Lagerinnenring 74 herum mindestens ein kugelförmiger Wälzkörper 80 entlangrollt. Am Wälzkörper 80 diametral gegenüberliegend zu der Lagerbahn 78 befindet sich an einem Lageraußenring 82 eine äußere Lagerbahn 78. Der Lageraußenring 82 ist in die Schneckennabe 34 eingepresst und stützt sich an dieser axial ab. Der Lageraußenring 82 ist ferner mittels eines im Querschnitt L-förmigen Fixierrings 84 am axialen Ende der Schneckennabe 34 axial fixiert. Die Schneckennabe 34 weist ferner an ihrem axialen Endbereich in Radialrichtung 18 eine größere Wandstärke 68 auf, als an ihrer übrigen Längserstreckung. Die größere Wandstärke 68 ist erforderlich, um den Lageraußenring 82 abzustützen.

In Axialrichtung 16 links und rechts von der Lageranordnung 28 ist bei jedem Fixierring 76, 84 eine Ringdichtung 86, 88 angeordnet, welche die Lageranordnung 28 zu beide axialen Seiten hin abdichtet.

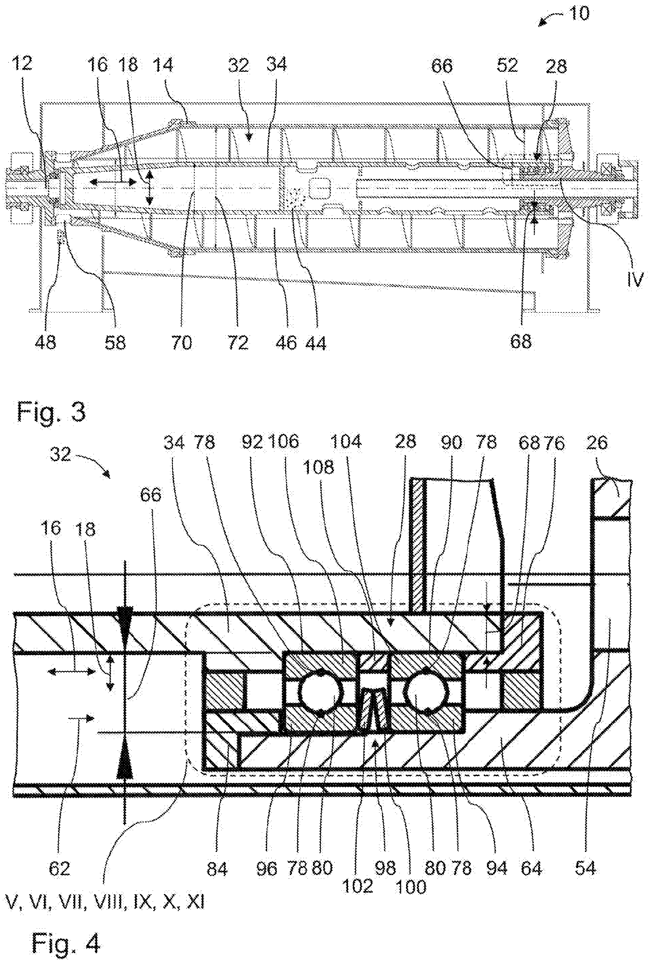

Fig. 3 zeigt eine Vollmantelschneckenzentrifuge 10 mit einer ersten Ausführungsform einer erfindungsgemäßen Lageranordnung 28, die im Detail IV in Fig. 4 dargestellt ist. Die Vollmantelschneckenzentrifuge 10 gemäß Fig. 3 und 4 umfasst ebenfalls eine Zentrifugentrommel 14 sowie eine Schnecke 32, wobei auch hier die Lagerhöhe 66 der erfindungsgemäßen Lageranordnung 28 eingezeichnet ist. Diese Lagerhöhe 66 ist dabei geringer als bei der Lageranordnung 28 gemäß Fig. 1. Da die Lagerhöhe 66 kleiner ist, ist auch der Außendurchmesser 70 der zugehörigen Schneckennabe 34 kleiner. Zusätzlich dazu ist bei der erfindungsgemäßen Lageranordnung 28 die Wandstärke 68 der Schneckennabe 34 geringer. Die geringere Wandstärke 68 verringert zusätzlich zu der kleineren Lagerhöhe 66 den Außendurchmesser 70 der Schneckennabe 34.

Bei verringertem Außendurchmesser 70 der Schneckennabe 34 und gleichem Innendurchmesser 72 der Zentrifugentrommel 14 wird der Abstand zwischen beiden vergrößert, das Volumen des Separierraums 46 steigt. Bei größerem Abstand zwischen Zentrifugentrommel 14 und Schneckennabe 34 vergrößert sich auf diese Weise auch die Teichtiefe 52 der Vollmantelschneckenzentrifuge 10. Die Vollmantelschneckenzentrifuge 10 gemäß Fig. 3 und 4 kann in ihrem Separierraum 46 mehr Material 44 aufnehmen und trennen.

Die Lageranordnung 28 umfasst gemäß Fig. 4 in Axialrichtung 16 nebeneinander ein erstes und ein zweites Axiallager 90, 92. Beide Axiallager 90, 92 weisen je einen Lagerinnenring 94 bzw. 96 auf. Die beiden Lagerinnenringe 94, 96 sind von dem Abstützbereich 64 des Trommeldeckels 26 abgestützt. Der Lagerinnenring 94 des ersten Axiallagers 90 ist auf den Abstützbereich 64 ortsfest aufgepresst. Auf diese Weise ist das erste Axiallager 90 als ein Festlager gestaltet. Bei dem zweite Lagerinnenring 96 ist der Abstützbereich 64 in Radialrichtung 18 zu der Zentrifugenachse 12 hin verkleinert, so dass der zweite Lagerinnenring 96 lose bzw. beweglich ist. Auf diese Weise ist das zweite Axiallager 92 als ein Loslager gestaltet. Beide Lagerinnenringe 94, 96 sind ferner zum inneren Ende des Abstützbereiches 64 hin mittels des Fixierrings 84 in Axialrichtung 16 zurückgehalten.

Zwischen den beiden Lagerinnenringen 94, 96 ist in Axialrichtung 16 ein ringförmiges, elastisches Mittel 98 angeordnet. Das elastische Mittel 98 umfasst zwei aneinandergereihte Tellerfedern 100, 102. Die Form der Aneinanderreihung der beiden Tellerfedern 100, 102 wird auch als Reihenschaltung bezeichnet. Die erste Tellerfeder 100 stützt sich an dem Lagerinnenring 94 und die zweite Tellerfeder 102 stützt sich an dem Lagerinnenring 96 ab.

Wenn die derartige Lageranordnung 28 von der Schnecke 32 mit Axialkraft 62 in Richtung des Trommeldeckels 26 belastet wird, wirkt diese Axialkraft zunächst auf das Axiallager 92 und belastet dieses. Dadurch wird der lose Lagerinnenring 96 von der Axialkraft 62 zu dem ortsfesten Lagerinnenring 94 hin verschoben. Der Lagerinnenring 96 drückt dabei auf die Tellerfeder 102, welche die Kraft an die erste Tellerfeder 100 weitergibt. Die erste Tellerfeder 100 wiederrum gibt die Kraft an den ersten Lagerinnenring 94 weiter. Die beiden Tellerfedern 100, 102 stellen auf diese Weise der Axialkraft 62 eine Kraft entgegen, die auf das Axiallager 92 wirkt, während zugleich der Rest der Axialkraft 62 auf das Axiallager 90 einwirkt. Die Axialkraft 62 wird also gleichmäßig auf beide Lagerinnenringe 94, 96 und damit auf beide Axiallager 90 bzw. 92 verteilt.

Ferner weisen beide Lagerinnenringe 94, 96 in Axialrichtung 16 nach außen jeweils eine Lagerbahn 78 auf an der kugelförmige Wälzkörper 80 rollen. Bei den Wälzkörpern 80 diametral gegenüberliegend ist die Lagerbahn 78 bei einem ersten und zweiten Lageraußenring 104, 106 ausgebildet. Die beiden Lageraußenringe 104, 106 stützen in Axialrichtung 16 und Radialrichtung 18 die Schneckennabe 34 ab. Beide Lageraußenringe 104, 106 sind in die Schneckennabe 34 eingepresst und von dem ersten Fixierring 76 gehalten.

Zwischen den beiden Lageraußenringen 104, 106 ist erfindungsgemäß in Axialrichtung 16 ein ringförmiges, weniger-elastisches Mittel 108 insbesondere ein nicht-elastisches Mittel 110 angeordnet. Das weniger-elastische Mittel 108, vorliegend aus kautschukartigem Material, gibt die Axialkraft 62 von der Schnecke 32 an den zweiten Lageraußenring 104. Der zweite Lageraußenring 106 gibt die Axialkraft 62 an das weniger-elastische Mittel 108, das seinerseits die Axialkraft 62 gedämpft an den ersten Lageraußenring 104 weitergibt. Der erste und zweite Lageraußenring 104 und 106 geben die Axialkraft 62 über ihre jeweiligen Lagerbahnen 78 an die jeweiligen Wälzkörper 80 ab. Die Wälzkörper 80 ihrerseits geben über die jeweiligen Lagerbahnen 78 die Kraft an die jeweiligen Lagerinnenringe 94 bzw. 96 weiter. Der erste und zweite Lageraußenring 104, 106 verschieben sich dabei in Axialrichtung 16 gegen den ersten und zweiten Lagerinnenring 94, 96.

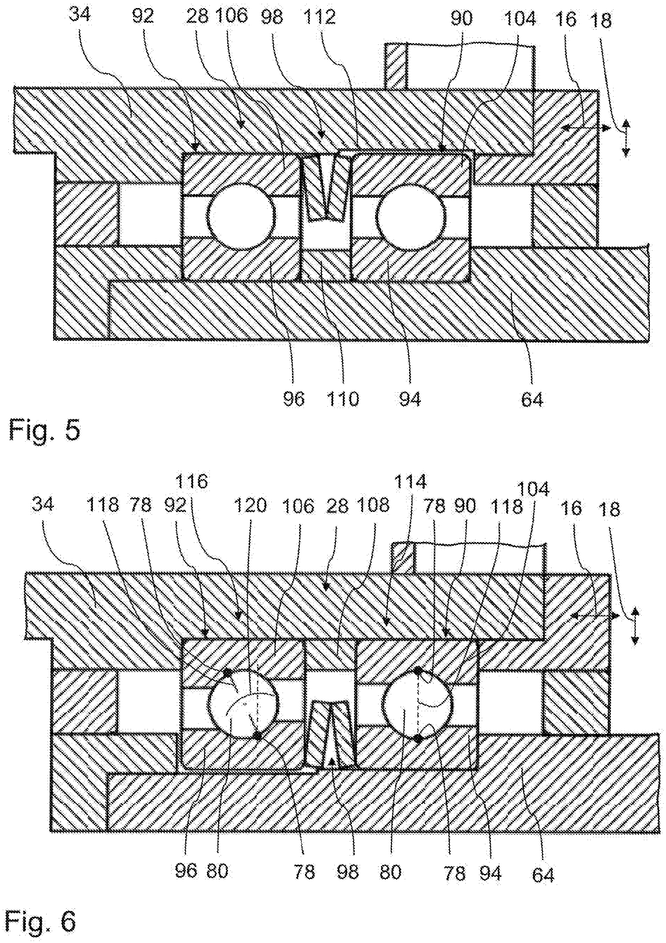

Fig. 5 zeigt die Lageranordnung 28 bei der das erste Axiallager 90 als ein bewegliches Loslager und das zweite Axiallager 92 als ein Festlager ausgeführt ist. Bei dem ersten Axiallager 90 ist dazu im Bereich der Schneckennabe 34 eine Nut 112 ausgebildet. Die Nut 112 bewirkt, dass der erste Lageraußenring 104 des ersten Axiallagers 90 in Axialrichtung 16 beweglich ist. Der erste Lagerinnenring 94 des ersten Axiallagers 90 ist hingegen auf den Abstützbereich 64 aufgepresst.

Das zweite Axiallager 92 ist mit seinem zweiten Lagerinnenring 96 in die Schneckennabe 34 eingepresst und von der Schneckennabe 34 abstützend gehalten. Der zweite Lagerinnenring 96 ist auf den Abstützbereich 64 aufgepresst.

Bei dieser ersten Variante der Lageranordnung 28 ist weiter das elastische Mittel 98 und das weniger-elastische Mittel 108 insbesondere das nicht-elastische Mittel 110 vertauscht. Das elastische Mittel 98 ist zwischen dem ersten und zweiten Lageraußenring 104, 106 und das weniger-elastische Mittel 108 ist hier als nicht-elastisches Mittel 110 ausgeführt und zwischen dem ersten und zweiten Lagerinnenring 94, 96 angeordnet.

In Fig. 6 ist die Lageranordnung 28 dargestellt, bei der beide Axiallager 90 und 92 wie in Fig. 4 angeordnet sind, also das erste Axiallager 90 ist ein Festlager und das zweite Axiallager 92 ist ein Loslager. Das erste Axiallager 90 ist bei der zweiten Variante der Lageranordnung 28 als ein Rillenkugellager 114 und das zweite Axiallager 92 als ein Spindellager 116 gestaltet. Das Rillenkugellager 114 und das Spindellager 116 sind Axiallager in einer jeweils unterschiedlichen Bauform mit kugelförmigen Wälzkörpern 80. Die Wälzkörper 80 laufen in Umfangsrichtung an den jeweiligen Lagerinnenringen 94, 96 und den jeweiligen Lageraußenringen 104, 106 jeweils an Lagerbahnen 78. Die Lagerbahnen 78 bilden dabei jeweils eine Laufbahn 118 aus. Die Laufbahn 118 weist relativ zur Radialrichtung 18 des jeweiligen Axiallagers 90, 92 einen Druckwinkel 120 bzw. Berührwinkel auf. Der Druckwinkel 120 der Laufbahn 118 des Rillenkugellagers 114 ist hier 0 Grad (in Worten: null Grad). Aufgrund des kleinen Druckwinkels 120 ist er nicht dargestellt. Der Druckwinkel 120 bei der Laufbahn 118 bei dem Spindellager 116 ist hier 25° (in Worten: fünfundzwanzig Grad).

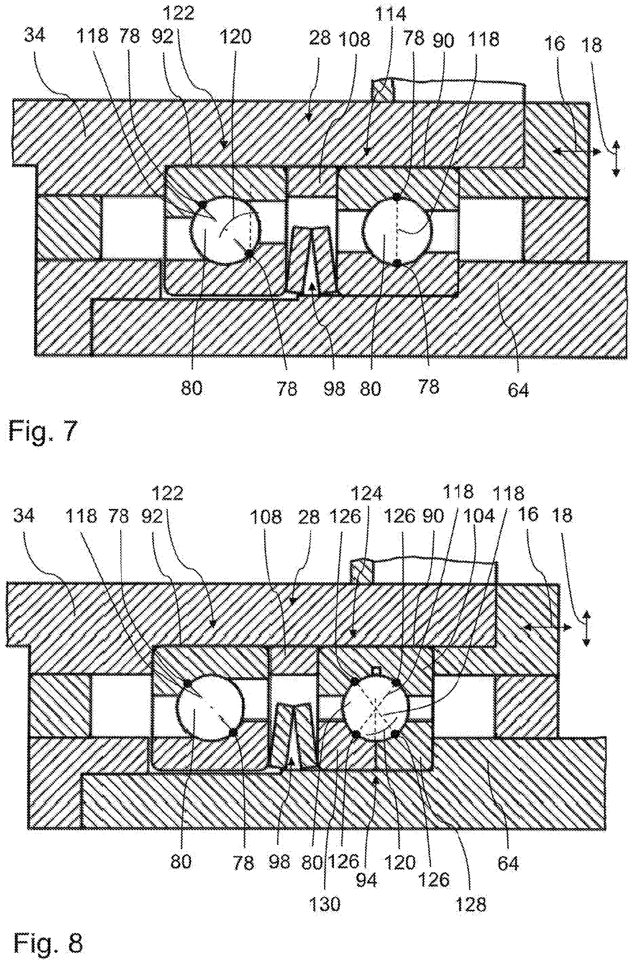

Fig. 7 zeigt die Lageranordnung 28 bei der das erste Axiallager 90 als Rillenkugellager 114 und das zweite Axiallager 92 als ein Schrägkugellager 122 ausgeführt ist. Das Schrägkugellager 122 ist eine Sonderform des Spindellagers 116 aus Fig. 6 mit einem Druckwinkel 120 zwischen 20° und 50° (in Worten: zwanzig Grad und fünfzig Grad). Der Druckwinkel 120 bei dem Schrägkugellager 122 ist hier 45° (in Worten: fünfundvierzig Grad).

Fig. 8 zeigt die Lageranordnung 28 mit dem zweiten Axiallager 92 als ein Schrägkugellager 122 und dem ersten Axiallager 90 als ein Vierpunktlager 124. Das Vierpunktlager 124 ist eine Sonderform des Schrägkugellagers 122 aus Fig. 7. Bei dem Vierpunktlager 124 gibt es im Unterschied zu dem Schrägkugellager 122 vier Berührpunkte 126 der Wälzkörper 80. Die Berührpunkte 126 der Wälzkörper 80 bilden in Umfangsrichtung vier Lagerbahnen 78 aus. Zwei der Lagerbahnen 78 sind auf dem ersten Lageraußenring 104 und zwei der Lagerbahnen 78 sind auf dem ersten Lagerinnenring 94 ausgebildet. Der Lagerinnenring 94 ist bei dem Vierpunktlager 124 in eine erste und eine zweite ringförmige Hälfte 128, 130 geteilt. Die eine erste und eine zweite Hälfte 128, 130 umfassen dabei jeweils eine Lagerbahn 78 des Lagerinnenrings 94. Die Lagerbahnen 78 die jeweils diametral auf dem Wälzkörper 80 gegenüberliegen bilden jeweils eine Laufbahn 118 aus. Die zwei Laufbahnen 118 bei einem Vierpunktlager 124 weisen einen Druckwinkel 120 von um die 35° (in Worten: fünfunddreißig Grad) auf. In Fig. 8 ist nur ein Druckwinkel 120 der vier Druckwinkel 120 dargestellt.

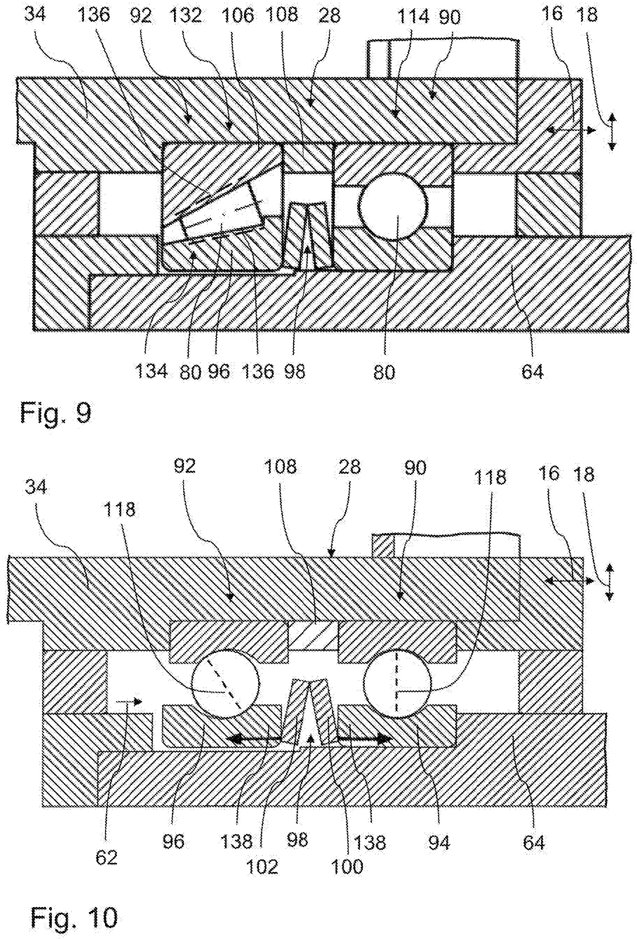

In Fig. 9 ist die Lageranordnung 28 mit dem ersten Axiallager 90 als ein Rillenkugellager 114 und dem zweiten Axiallager 92 als ein Kegelrollenlager 132 dargestellt. Bei Kegelrollenlagern 132 ist im Unterschied zu den vorher erwähnten Lagern der Wälzkörper 80 nicht kugelförmig sondern kegelförmig. Der Kegelstumpf 134 des Kegelrollenlagers 132 läuft nicht an einer Lagerbahn 78, sondern liegt an einer breiteren Lagerfläche 136 auf. Die Lagerfläche 136 ist anstelle der Lagerbahn 78 an dem zweiten Lagerinnenring 96 und dem zweiten Lageraußenring 106 ausgebildet. Der Lageraußenring 106 und der Lagerinnenring 96 sind lose miteinander verbaut und sind zur Montage auseinander zu nehmen. Dadurch, dass beide Lagerringe auseinander zunehmen sind, ist zwischen ihnen eine größere Anzahl an Wälzkörpern 80, als wie bei dem Rillenkugellager in Fig. 5 zu montieren.

Die größere Anzahl an Wälzkörpern 80 und die breite Lagerfläche 136 bewirken, dass das Kegelrollenlager 132 sowohl in Radialrichtung 18, als auch in Axialrichtung 16 bei gleicher Baugröße höher belastbar ist, als ein Rillenkugellager 114.

In Fig. 10 ist eine erfindungsgemäße Lageranordnung 28 gezeigt bei der die beiden Tellerfedern 100, 102 jeweils mit einer ersten Vorspannkraft 138 vorgespannt sind. Die erste Vorspannkraft 138 der Tellerfedern 100, 102 drückt bereits im Ruhezustand der Vollmantelschneckenzentrifuge 10 die beiden Lagerinnenringe 94, 96 in Axialrichtung 16 nach außen bzw. auseinander. Die beiden Lagerinnenringe 94, 96 sind also im Ruhezustand mit dieser ersten Vorspannkraft 138 in Axialrichtung 16 belastet. Die erste Vorspannkraft 138 entspricht im Ruhezustand der Hälfte der Axialkraft 62 der Vollmantelschneckenzentrifuge 10 im Betriebszustand bei Maximalbelastung. Es ist dabei im Ruhezustand der Vollmantelschneckenzentrifuge 10 das erste Axiallager 90 in Axialrichtung 16 entgegengesetzt dem zweiten Axiallager 92 mit der ersten Vorspannkraft 138 belastet.

Das hier dargestellte Ausführungsbeispiel zeigt die Lageranordnung 28 mit den zwei Axiallagern 90, 92 die mit einer Axialkraft 62 belastet ist. Die Axialkraft entspricht der Vorspannkraft 138. Wie bei dem ersten Axiallager 90 deutlich, anhand der zur Radialrichtung 18 ausgerichteten Laufbahn 118, zu erkennen ist, nimmt das erste Axiallager 90 keine Axialkraft 62 auf. Bei dem zweiten Axiallager 92 ist anhand der zur Radialrichtung 18 schrägen Laufbahn 118 zu erkennen, dass das zweite Axiallager 92 die Axialkraft 62 aufnimmt.

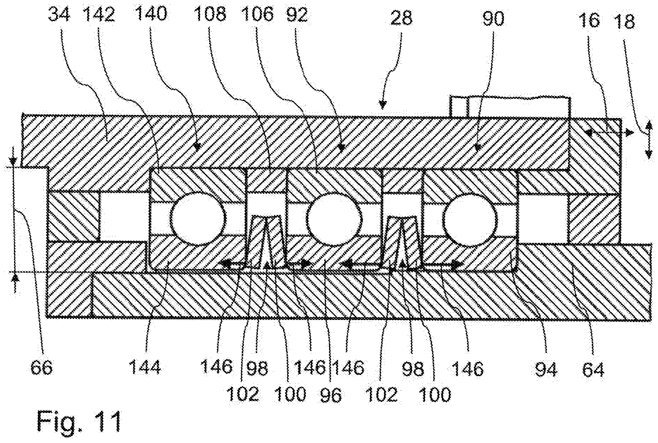

Wie in Fig. 11 zu erkennen ist, umfasst die Lageranordnung 28 ein drittes Axiallager 140 und ein weiteres zweites elastisches Mittel 98 an dem das dritte Axiallager 140 in Axialrichtung 16 abgestützt ist. Das dritte Axiallager 140 ist in Axialrichtung 16 nach dem zweiten Axiallager 92 in Reihe zu dem ersten und zweiten Axiallager 90, 92 geschalten. Wie bereits bei dem ersten und zweiten Axiallager 90, 92 umfasst das dritte Axiallager 140 einen dritten Lageraußenring 142 und einen dritten Lagerinnenring 144. Zwischen dem zweiten und dritten Lageraußenring 106, 142 ist auch hier in Axialrichtung 16 ein weiteres weniger-elastisches Mittel 108, insbesondere ein nicht-elastisches Mittel 110 angeordnet. Zwischen dem zweiten und dem dritten Lagerinnenring 96, 144 ist in Axialrichtung 16 das elastische Mittel 98 angeordnet. Dieses elastische Mittel 98 sowie das elastische Mittel 98 zwischen dem ersten und zweiten Lagerinnenring 94, 96 sind mit einer zweiten Vorspannkraft 146 versehen. Diese zweite Vorspannkraft 146 entspricht im Ruhezustand einem Drittel der Axialkraft 62 der Vollmantelschneckenzentrifuge 10 im Betriebszustand bei Maximalbelastung. Wie das zweite Axiallager 92 ist auch das dritte Axiallager 140 nicht auf den Abstützbereich 64 aufgepresst, sondern in Radialrichtung 18 von dem Abstützbereich 64 gehalten. Das zweite und dritte Axiallager 92, 140 sind als in Axialrichtung 16 bewegliche Loslager ausgeführt.

Bei diesem Ausführungsbeispiel wird die Axialkraft 62 von der Schneckennabe 34 auf die drei Axiallager 90, 92, 140 verteilt. Aufgrund der Verteilung der Axialkraft 62 auf drei Axiallager 90, 92, 140 sind die einzelnen Axiallager 90, 92, 140 mit einer kleineren Höhe 66 dimensioniert.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Vollmantelschneckenzentrifuge
- 12: Zentrifugenachse
- 14: Zentrifugentrommel
- 16: Axialrichtung
- 18: Radialrichtung
- 20: Gehäuse
- 22: erstes Trommellager
- 24: zweites Trommellager
- 26: Trommeldeckel
- 28: Lageranordnung
- 30: Axiallager
- 32: Schnecke
- 34: Schneckennabe
- 36: Schneckenwendel
- 38: Schneckenlager
- 40: Einlassrohr
- 42: Einlassraum
- 44: gemischtes Material
- 46: Separierraum
- 48: schwere Phase
- 50: leichte Phase
- 51: Flüssigkeitsstand
- 52: Teichtiefe
- 54: Auslassöffnung
- 56: Wehrplatte
- 58: Auswurföffnung
- 60: Förderrichtung
- 62: Axialkraft
- 64: Abstützbereich
- 66: Lagerhöhe
- 68: Wandstärke
- 70: Außendurchmesser
- 72: Innendurchmesser
- 74: Lagerinnenring
- 76: Fixierring
- 78: Lagerbahn
- 80: Wälzkörper
- 82: Lageraußenring
- 84: Fixierring
- 86: Ringdichtung
- 88: Ringdichtung
- 90: erstes Axiallager
- 92: zweites Axiallager
- 94: erster Lagerinnenring
- 96: zweiter Lagerinnenring
- 98: elastisches Mittel
- 100: erste Tellerfeder
- 102: zweite Tellerfeder
- 104: erster Lageraußenring
- 106: zweiter Lageraußenring
- 108: weniger-elastisches Mittel
- 110: nicht-elastisches Mittel
- 112: Nut
- 114: Rillenkugellager
- 116: Spindellager
- 118: Laufbahn
- 120: Druckwinkel
- 122: Schrägkugellager
- 124: Vierpunktlager
- 126: Berührpunkt
- 128: erste Hälfte
- 130: zweite Hälfte
- 132: Kegelrollenlager
- 134: Kegelstumpf
- 136: Lagerfläche
- 138: erste Vorspannkraft
- 140: drittes Axiallager
- 142: dritter Lageraußenring
- 144: dritter Lagerinnenring
- 146: zweite Vorspannkraft

## Patentansprüche

1. Vollmantelschneckenzentrifuge (10) mit einer Zentrifugenachse (12), einer Schnecke (32) und mit einer Lageranordnung (28) der Schnecke (32) mit einem ersten Axiallager (90) und einem zweiten Axiallager (92), die zum Aufnehmen einer Axialkraft (62) der Schnecke (32) vorgesehen sind,
**dadurch gekennzeichnet, dass** ein elastisches Mittel (98) vorgesehen ist, an dem das zweite Axiallager (92) zur Abstützung der Axialkraft (62) der Schnecke in Axialrichtung (16) abgestützt ist.

2. Vollmantelschneckenzentrifuge nach Anspruch 1,
**dadurch gekennzeichnet, dass** das elastische Mittel (98) zwischen dem ersten und dem zweiten Axiallager (90, 92) angeordnet ist.

3. Vollmantelschneckenzentrifuge nach Anspruch 1 oder 2,
**dadurch gekennzeichnet, dass** das erste und das zweite Axiallager (90, 92) je mit einem Lagerinnenring (94, 96) und einem Lageraußenring (104, 106) gestaltet sind, das elastische Mittel (98) zwischen den beiden Lagerinnenringen (94, 96) angeordnet ist und zwischen den beiden Lageraußenringen (104, 106) ein weniger-elastisches Mittel (108), insbesondere ein nicht-elastisches Mittel (110) angeordnet ist.

4. Vollmantelschneckenzentrifuge nach Anspruch 1 oder 2,
**dadurch gekennzeichnet, dass** das erste und das zweite Axiallager (90, 92) je mit einem Lagerinnenring (94, 96) und einem Lageraußenring (104, 106) gestaltet sind, das elastische Mittel (98) zwischen den beiden Lageraußenringen (104, 106) angeordnet ist und zwischen den beiden Lagerinnenringen (94, 96) ein weniger-elastisches Mittel (108), insbesondere ein nicht-elastisches Mittel (110) angeordnet ist.

5. Vollmantelschneckenzentrifuge nach einem der Ansprüche 1 bis 4,
**dadurch gekennzeichnet, dass** das zweite Axiallager (92) als ein Spindellager (116) und das erste Axiallager (90) als ein Rillenkugellager (114) gestaltet ist.

6. Vollmantelschneckenzentrifuge nach einem der Ansprüche 1 bis 4,
**dadurch gekennzeichnet, dass** das zweite Axiallager (92) als ein Schrägkugellager (122) und das erste Axiallager (90) als ein Rillenkugellager (114) gestaltet ist.

7. Vollmantelschneckenzentrifuge nach einem der Ansprüche 1 bis 4,
**dadurch gekennzeichnet, dass** das zweite Axiallager (92) als ein Schrägkugellager (122) und das erste Axiallager (90) als ein Vierpunktlager (124) gestaltet ist.

8. Vollmantelschneckenzentrifuge nach einem der Ansprüche 1 bis 4,
**dadurch gekennzeichnet, dass** das zweite Axiallager (92) als ein Kegelrollenlager (132) und das erste Axiallager (90) als ein Rillenkugellager (114) gestaltet ist.

9. Vollmantelschneckenzentrifuge nach einem der Ansprüche 1 bis 8,
**dadurch gekennzeichnet, dass** ein drittes Axiallager (140) zum Aufnehmen einer Axialkraft (62) der Schnecke (32) vorgesehen ist und ein weiteres elastisches Mittel (98) vorgesehen ist, an dem das dritte Axiallager (140) in Axialrichtung (16) abgestützt ist.

10. Vollmantelschneckenzentrifuge nach einem der Ansprüche 1 bis 9,
**dadurch gekennzeichnet, dass** das elastische Mittel (98), insbesondere das weitere elastische Mittel (98), eine Vorspannung aufweist.

## Claims

1. A solid bowl screw centrifuge (10) having a centrifuge axis (12), a screw (32), and having a bearing arrangement (28) of the screw (32) comprising a first axial bearing (90) and a second axial bearing (92), which are provided for receiving an axial force (62) of the screw (32),
**characterized in that** an elastic means (98) is provided against which the second axial bearing (92) is supported for supporting the axial force (62) of the screw in the axial direction (16).

2. The solid bowl screw centrifuge according to claim 1,
**characterized in that** the elastic means (98) is arranged between the first and the second axial bearing (90, 92).

3. The solid bowl screw centrifuge according to claim 1 or 2,
**characterized in that** the first and the second axial bearing (90, 92) each are configured with a bearing inner ring (94, 96) and a bearing outer ring (104, 106), the elastic means (98) is arranged between the two bearing inner rings (94, 96), and a less elastic means (108), in particular a non-elastic means (110) is arranged between the two bearing outer rings (104, 106).

4. The solid bowl screw centrifuge according to claim 1 or 2,
**characterized in that** the first and the second axial bearing (90, 92) each are configured with a bearing inner ring (94, 96) and a bearing outer ring (104, 106), the elastic means (98) is arranged between the two bearing outer rings (104, 106), and between the two bearing inner rings (94, 96), a less elastic means (108), in particular a non-elastic means (110) is arranged between the two bearing inner rings (94, 96).

5. The solid bowl screw centrifuge according to any one of claims 1 to 4,
**characterized in that** the second axial bearing (92) is configured as a spindle bearing, and the first axial bearing (90) is configured as a grooved ball bearing (114).

6. The solid bowl screw centrifuge according to any one of claims 1 to 4,
**characterized in that** the second axial bearing (92) is configured as an angular ball bearing (122), and the first axial bearing (90) is configured as a grooved ball bearing (114).

7. The solid bowl screw centrifuge according to any one of claims 1 to 4,
**characterized in that** the second axial bearing (92) is configured as an angular ball bearing (122), and the first axial bearing (90) is configured as a four-point bearing (124).

8. The solid bowl screw centrifuge according to any one of claims 1 to 4,
**characterized in that** the second axial bearing (92) is configured as a tapered roller bearing (132), and the first axial bearing (90) is configured as a grooved ball bearing (114).

9. The solid bowl screw centrifuge according to any one of claims 1 to 8,
**characterized in that** a third axial bearing (140) is provided for receiving an axial force (62) of the screw (32), and a further elastic means (98) is provided against which the third axial bearing (140) is supported in the axial direction (16).

10. The solid bowl screw centrifuge according to any one of claims 1 to 9,
**characterized in that** the elastic means (98), in particular the further elastic means (98) has pretension.

## Revendications

1. Centrifugeuse à vis sans fin à paroi pleine (10), comportant un axe de centrifugeuse (12), une vis sans fin (32) et un ensemble de palier (28) de la vis sans fin (32) ayant un premier palier axial (90) et un second palier axial (92) qui sont prévus pour absorber une force axiale (62) de la vis sans fin (32),
**caractérisée en ce qu'**il est prévu un moyen élastique (98) sur lequel le second palier axial (92) est supporté pour supporter la force axiale (62) de la vis sans fin dans la direction axiale (16).

2. Centrifugeuse à vis sans fin à paroi pleine selon la revendication 1,
**caractérisée en ce que** le moyen élastique (98) est disposé entre le premier et le second palier axial (90, 92).

3. Centrifugeuse à vis sans fin à paroi pleine selon la revendication 1 ou 2,
**caractérisée en ce que** le premier et le second palier axial (90, 92) sont chacun conçus avec une bague intérieure de palier (94, 96) et avec une bague extérieure de palier (104, 106), le moyen élastique (98) est disposé entre les deux bagues intérieures de palier (94, 96), et un moyen moins élastique (108), en particulier un moyen non élastique (110), est disposé entre les deux bagues extérieures de palier (104, 106).

4. Centrifugeuse à vis sans fin à paroi pleine selon la revendication 1 ou 2,
**caractérisée en ce que** le premier et le second palier axial (90, 92) sont chacun conçus avec une bague intérieure de palier (94, 96) et avec une bague extérieure de palier (104, 106), le moyen élastique (98) est disposé entre les deux bagues extérieures de palier (104, 106), et un moyen moins élastique (108), en particulier un moyen non élastique (110), est disposé entre les deux bagues intérieures de palier (94, 96).

5. Centrifugeuse à vis sans fin à paroi pleine selon l'une des revendications 1 à 4,
**caractérisée en ce que** le second palier axial (92) est conçu comme un palier de broche (116) et le premier palier axial (90) est conçu comme un roulement rainuré à billes (114).

6. Centrifugeuse à vis sans fin à paroi pleine selon l'une des revendications 1 à 4,
**caractérisée en ce que** le second palier axial (92) est conçu comme un roulement à billes à contact oblique (122) et le premier palier axial (90) est conçu comme un roulement rainuré à billes (114).

7. Centrifugeuse à vis sans fin à paroi pleine selon l'une des revendications 1 à 4,
**caractérisée en ce que** le second palier axial (92) est conçu comme un roulement à billes à contact oblique (122) et le premier palier axial (90) est conçu comme un palier à quatre points (124).

8. Centrifugeuse à vis sans fin à paroi pleine selon l'une des revendications 1 à 4,
**caractérisée en ce que** le second palier axial (92) est conçu comme un roulement à rouleaux coniques (132) et le premier palier axial (90) est conçu comme un roulement rainuré à billes (114).

9. Centrifugeuse à vis sans fin à paroi pleine selon l'une des revendications 1 à 8,
**caractérisée en ce qu'**il est prévu un troisième palier axial (140) pour absorber une force axiale (62) de la vis sans fin (32), et il est prévu un autre moyen élastique (98) sur lequel le troisième palier axial (140) est supporté dans la direction axiale (16).

10. Centrifugeuse à vis sans fin à paroi pleine selon l'une des revendications 1 à 9,
**caractérisée en ce que** le moyen élastique (98), en particulier l'autre moyen élastique (98), présente une précontrainte.
